# EUROPEAN PATENT APPLICATION

(11) **EP 4 725 384 A1**
(43) Date of publication of application: **15.04.2026**
(21) Application number: 24854310.0
(22) Date of filing: 08.07.2024
(51) Int. Cl.: A47L 11/40

(54) **CLEANING ROBOT AND METHOD FOR CONTROLLING CLEANING ROBOT**

(30) Priority: 14.08.2023 KR 20230106533
(71) Applicant: Samsung Electronics Co., Ltd., Suwon-si, Gyeonggi-do 16677 (KR)
(72) Inventor: RYU, Jiwon, Suwon-si, Gyeonggi-do 16677 (KR); KIM, Sol, Suwon-si, Gyeonggi-do 16677 (KR); KIM, Juyeong, Suwon-si, Gyeonggi-do 16677 (KR); YOON, Heesuk, Suwon-si, Gyeonggi-do 16677 (KR); CHOI, Hongseok, Suwon-si, Gyeonggi-do 16677 (KR)
(74) Representative: Walaski, Jan Filip
(86) International application number: PCT/KR2024/009694
(87) International publication number: WO 2025/037758

(57) **Abstract**

A cleaning robot includes: a main body; a wheel provided in the main body to move the main body; a pad holder to which a wet cleaning pad is attachable and which is rotatable in a lower portion of the main body; a motor configured to rotate the pad holder; a floor sensor configured to detect a floor being cleaned; a controller electrically connected to the wheel, the motor, and the floor sensor; and a lifting assembly configured to lower the pad holder toward the floor as the pad holder rotates in a preset forward direction, or raise the pad holder toward the main body as the pad holder rotates in a reverse direction opposite to the forward direction.

## Description

### [Technical Field]

The disclosure relates to a cleaning robot capable of performing wet cleaning or dry cleaning, and a method for controlling the cleaning robot.

### [Background Art]

A cleaning robot may identify objects located in an indoor space while moving within the indoor space, and may generate a map of the indoor space. The cleaning robot may clean the indoor space using the map of the indoor space. In addition, the cleaning robot may collect environmental data of the indoor space. The cleaning robot may perform cleaning by driving itself in the area to be cleaned without user operation.

The cleaning robot may include a wet cleaning pad used for wet cleaning. The wet cleaning pad may be rotatably provided at a lower portion of a main body of the cleaning robot. When the wet cleaning pad contacts the floor to be cleaned and rotates, contaminants on the floor may be cleaned. However, when the cleaning robot moves over a flooring material that requires dry cleaning (e.g., a carpet), the wet cleaning pad requires to be raised to prevent the flooring material from being soiled by the wet cleaning pad.

### [Disclosure]

### [Technical Solution]

The disclosure provides a cleaning robot that, when dry cleaning is required based on the type of floor, may raise a wet cleaning pad and adjust a position of the wet cleaning pad according to a predetermined condition, and a method for controlling the same.

The disclosure provides a cleaning robot that may independently adjust a position of each of a plurality of pad holders, and a method for controlling the same.

According to an embodiment of the disclosure, a cleaning robot may include: a main body; a wheel provided in the main body to move the main body; a pad holder to which a wet cleaning pad is attachable and which is rotatable in a lower portion of the main body; a motor configured to rotate the pad holder; a floor sensor configured to detect a floor being cleaned; a controller electrically connected to the wheel, the motor, and the floor sensor; and a lifting assembly configured to lower the pad holder toward the floor as the pad holder rotates in a preset forward direction, or raise the pad holder toward the main body as the pad holder rotates in a reverse direction opposite to the forward direction. The controller may be configured to identify a type of the floor based on a detection signal transmitted from the floor sensor. The controller may be configured to determine whether dry cleaning is required based on the type of the floor. The controller may be configured to control the motor to rotate the pad holder in the reverse direction to raise the pad holder based on the dry cleaning being required.

According to an embodiment of the disclosure, a method for controlling a cleaning robot may include: identifying a type of a floor using a floor sensor; determining, by a controller, whether dry cleaning is required based on the type of the floor; and controlling, by the controller, a motor to rotate a pad holder in a reverse direction opposite to a preset forward direction so as to raise the pad holder, based on the dry cleaning being required.

According to the disclosure, when dry cleaning is required based on the type of floor, a cleaning robot and a method for controlling the same may raise a wet cleaning pad and adjust a position of the wet cleaning pad according to a predetermined condition. Thus, a flooring material may be prevented from being soiled by the wet cleaning pad.

According to the disclosure, a cleaning robot and a method for controlling the same may independently adjust a position of each of a plurality of pad holders, thereby reducing power consumption and wear on a lifting assembly that lowers or raises the pad holders.

### [Description of Drawings]

FIG. 1 illustrates a cleaning robot according to an embodiment.
FIG. 2 illustrates a lower portion of a cleaning robot according to an embodiment.
FIG. 3 illustrates a state in which pad holders are separated from a cleaning robot according to an embodiment.
FIG. 4 illustrates a state in which a pad holder is lowered according to an embodiment.
FIG. 5 illustrates a state in which a pad holder is raised according to an embodiment.
FIG. 6 illustrates a vertical cross-section of a pad holder according to an embodiment.
FIG. 7 is a control block diagram of a cleaning robot according to an embodiment.
FIG. 8 illustrates a rotation direction of a pad holder in a case where a cleaning robot according to an embodiment cleans a hard floor.
FIG. 9 illustrates a rotation direction of a pad holder in a case where a cleaning robot according to an embodiment cleans a soft floor.
FIG. 10 illustrates an example in which a position of a pad holder is changed when a cleaning robot according to an embodiment rotates.
FIG. 11 illustrates another example in which a position of a pad holder is changed when a cleaning robot according to an embodiment rotates.
FIG. 12 is a flowchart briefly illustrating a method for controlling a cleaning robot according to an embodiment.
FIG. 13 is a flowchart illustrating a method for controlling a cleaning robot according to a type of floor being cleaned in more detail.
FIG. 14 is a flowchart illustrating a method for controlling a cleaning robot including a plurality of pad holders.

### [Modes of the Invention]

Various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

For example, "at least one of A, B, or C" may include 'A', 'B', 'C', 'A and B', 'B and C', 'A and C', and 'A, B and C'.

Terms such as "1st", "2nd", "primary", or "secondary" may be used simply to distinguish an element from other elements, without limiting the element in other aspects (e.g., importance or order).

When an element (e.g., a first element) is referred to as being "(functionally or communicatively) coupled" or "connected" to another element (e.g., a second element), the first element may be connected to the second element, directly (e.g., wired), wirelessly, or through a third element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

As used herein, the term "and/or" includes any and all combinations of one or more of the associated listed items.

Hereinafter, an operation principle and embodiments will be described in detail with reference to the accompanying drawings.

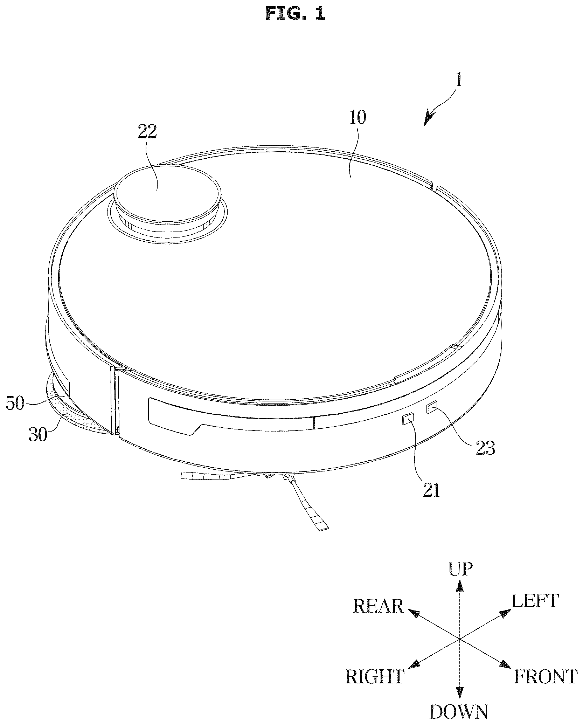

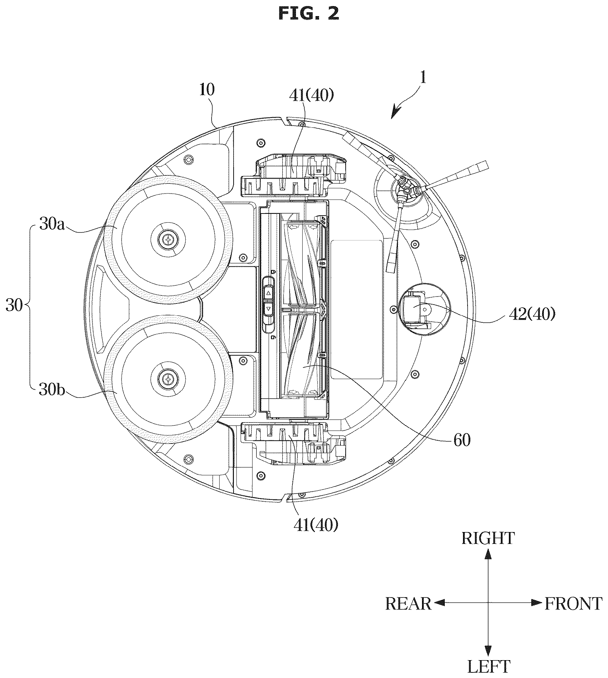

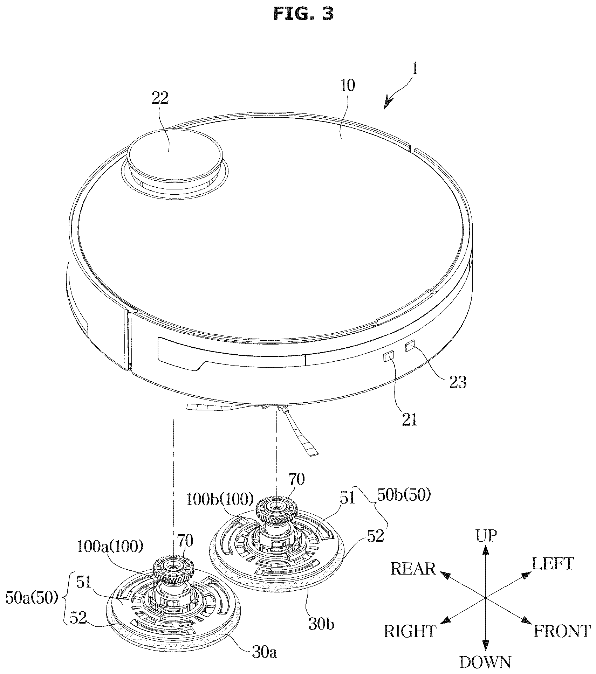

FIG. 1 illustrates a cleaning robot according to an embodiment. FIG. 2 illustrates a lower portion of the cleaning robot according to an embodiment. FIG. 3 illustrates a state in which pad holders are separated from the cleaning robot according to an embodiment.

Terms such as front, rear, upper, lower, left, and right in the drawings are defined based on the direction in which a cleaning robot 1 moves forward, but the shapes and positions of each component are not limited by these terms. In addition, expressions that indicate a direction are used to clearly understand the disclosure, and the direction may be defined otherwise.

Referring to FIG. 1, FIG. 2, and FIG. 3, the cleaning robot 1 may include a main body 10, and wheels 40 that are rotatable with respect to an axis horizontal to the ground and move the main body 10. The main body 10 may include a case forming an exterior. A plurality of wheels 40 may be provided. For example, two main wheels 41 and an auxiliary wheel 42 may be provided at a lower portion of the main body 10. The wheels 40 may include a wheel motor, and may rotate by the rotational force generated by the wheel motor.

A brush 60 may be provided at a lower portion of the main body 10. The brush 60 may scatter foreign substances present on the traveling path of the main body 10. The brush 60 is provided in an inlet formed on a bottom of the main body 10, and scatters foreign substances into the inlet while rotating around a rotation axis perpendicular to the front of the main body 10. An intake fan 61 for generating suction force to draw in foreign substances and a dust bin for storing foreign substances may be provided inside the main body 10.

The cleaning robot 1 may include various sensors. For example, the cleaning robot 1 may include at least one of a camera 21, a light detection and ranging (lidar) sensor 22, or an ultrasonic sensor 23. Various sensors may be provided in/on the main body 10. At least some of the various sensors may be exposed to the outside of the main body 10. The camera 21, the lidar sensor 22, and the ultrasonic sensor 23 may be provided at the front, side, rear, and/or upper portion of the main body 10.

The camera 21 may be provided at the front of the main body 10. The camera 21 may include a camera. The camera 21 may generate an image with a field of view

(FOV) facing the front of the main body 10. The position of the camera 21 is not limited to the front of the main body 10. The camera 21 may rotate and photograph the surroundings of the cleaning robot 1. Other cameras may be further provided at the side and/or rear of the main body 10.

The camera 21 may include an image sensor that collects light incident from the outside to generate image information. For example, the camera 21 may include at least one of an RGB camera that collects visible light and generates a color image, or an infrared camera that generates an infrared image. The camera 21 may include a binocular camera (stereo camera). The binocular camera may obtain depth information of an object using disparity between both eyes. The image information obtained by the camera 21 may be transmitted to a controller 300 of the cleaning robot 1. The controller 300 may process the image information to identify an object (external object) around the cleaning robot 1. The controller 300 may identify the type of floor being cleaned from the image obtained by the camera 21.

The lidar sensor 22 may emit light (pulse laser) to the outside, and receive the reflected light from an external object in a preset direction. The lidar sensor 22 may rotate 360 degrees clockwise or counterclockwise. Because the lidar sensor 22 may emit light across 360 degrees and receive reflected light, the cleaning robot 1 may use the lidar sensor 22 to detect external objects from all directions.

Lidar data generated by the lidar sensor 22 may be transmitted to the controller 300 of the cleaning robot 1. The lidar data may include light propagation direction information and information about a distance to an external object. The controller 300 may process the lidar data to perform three-dimensional (3D) modeling of an indoor space. The controller 300 may process the lidar data to obtain 3D data of external objects. The controller 300 may identify the type of floor being cleaned from the lidar data obtained by the lidar sensor 22.

The ultrasonic sensor 23 may emit ultrasonic waves, and receive echo signals reflected from an object. The controller 300 of the cleaning robot 1 may identify the presence of the object and calculate a distance to the object based on ultrasonic data including a time difference between the ultrasonic waves emitted by the ultrasonic sensor 23 and the received echo signals. The controller 300 may identify the type of floor being cleaned from the ultrasonic data obtained by the ultrasonic sensor 23.

In addition to the above-described components, various sensors may be included in the cleaning robot 1. For example, the cleaning robot 1 may further include at least one of an impact sensor detecting impact with an external object, a motion sensor 24 detecting movement and rotation of the cleaning robot 1, a wheel sensor 25 detecting rotation and speed of the wheel 40, a time-of-flight (ToF) sensor measuring a distance to an external object, a radio frequency (RF) sensor, or a radar sensor.

The cleaning robot 1 may include a wet cleaning pad 30 and a pad holder 50. The wet cleaning pad 30 may refer to a mop. The wet cleaning pad 30 may be made of various materials (e.g., fabric, sponge, etc.). The wet cleaning pad 30 may be attached to the pad holder 50.

The pad holder 50 may be rotatably provided at a lower portion of the main body 10. The wet cleaning pad 30 may rotate according to the rotation of the pad holder 50. Wet cleaning may be performed as the wet cleaning pad 30 contacts and rotates on the floor to be cleaned. The wet cleaning pad 30 and the pad holder 50 may be formed in a disc shape.

Two wet cleaning pads 30 and two pad holders 50 may be provided. For example, a first wet cleaning pad 30a and a first pad holder 50a may be located at the lower right of the main body 10. A second wet cleaning pad 30b and a second pad holder 50b may be located at the lower left of the main body 10. The number of wet cleaning pads 30 and pad holders 50 may vary depending on the design.

The pad holder 50 may include a holder body 51 and a rotating plate 52. Velcro for attaching the wet cleaning pad 30 may be provided on at least a portion of the lower side of the holder body 51. The holder body 51 and the rotating plate 52 may be detachably coupled. The rotating plate 52 may rotate according to the operation of a motor 80, which will be described below. As the rotating plate 52 rotates, the holder body 51 may rotate together. The holder body 51 and the rotating plate 52 may each be formed in a disc shape.

The pad holder 50 may be lowered toward the floor as the pad holder 50 rotates in a preset forward direction. The pad holder 50 may be raised toward the main body 10 as the pad holder 50 rotates in a reverse direction opposite to the forward direction. A lifting assembly 100 that enables the descent or ascent of the pad holder 50 may be provided.

In a case where a plurality of pad holders 50 are provided, a plurality of lifting assemblies 100 corresponding to the plurality of pad holders 50 may be provided. For example, the cleaning robot 1 may include a first lifting assembly 100a that lowers or raises the first pad holder 50a, and a second lifting assembly 100b that lowers or raises the second pad holder 50b. The first lifting assembly 100a and the second lifting assembly 100b may have the same structure.

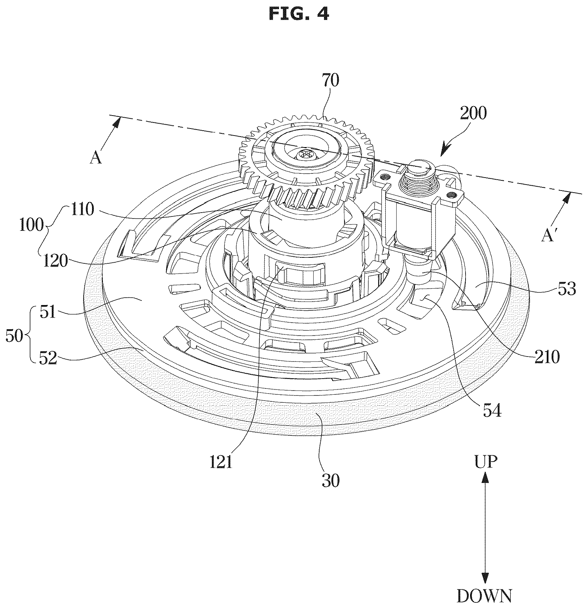

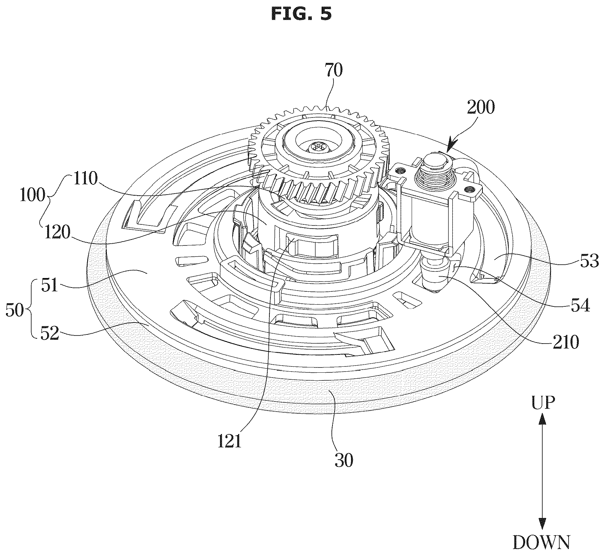

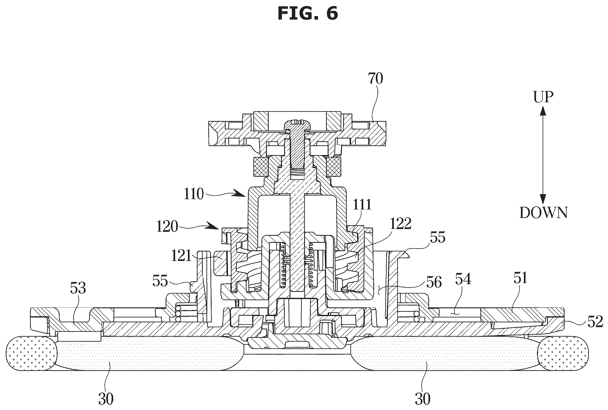

FIG. 4 illustrates a state in which a pad holder is lowered according to an embodiment. FIG. 5 illustrates a state in which a pad holder is raised according to an embodiment. FIG. 6 illustrates a vertical cross-section of a pad holder according to an embodiment. FIG. 6 is a cross-sectional view taken along the line A-A' shown in FIG. 4.

Referring to FIG. 4, FIG. 5, and FIG. 6, the cleaning robot 1 may include the pad holder 50, the lifting assembly 100, and a solenoid device 200. The lifting assembly 100 may lower or raise the pad holder 50 according to the rotation of the pad holder 50. The solenoid device 200 may separate the holder body 51 of the pad holder 50 from the rotating plate 52.

The holder body 51 may be detachably coupled to an upper surface of the rotating plate 52. The holder body 51 may be in a disc shape and may include an attachment protrusion 53 and a guide groove 54. The attachment protrusion 53 may protrude downward from a lower surface of the holder body 51. Velcro for attaching the wet cleaning pad 30 may be provided on the attachment protrusion 53. The rotating plate 52 may include an insertion groove into which the attachment protrusion 53 of the holder body 51 is inserted.

The guide groove 54 of the holder body 51 may be provided to allow a stopper 210 of the solenoid device 200 to be inserted therein. When the stopper 210 of the solenoid device 200 is inserted into the guide groove 54 and the rotating plate 52 rotates, the holder body 51 is caught by the stopper 210. The rotation of the holder body 51 is restricted by the stopper 210, and when the rotating plate 52 continuously rotates, the holder body 51 and the rotating plate 52 may be separated and spaced apart from each other. As the holder body 51 and the rotating plate 52 are spaced apart from each other, the wet cleaning pad 30, which is attached to the lower surface of the holder body 51, is thereby separated from the holder body 51.

The rotating plate 52 may be connected to a rotation axis of a gear 70. The gear 70 is connected to the motor 80 to be described below, and may rotate by the rotational force generated by the motor 80. The rotating plate 52 may rotate according to the rotation of the gear 70. The rotating plate 52 may include a receiving groove 56 for receiving the lifting assembly 100. A cylindrical protruding wall 55 opened upward may be formed at the center of the rotating plate 52. The lifting assembly 100 may be received in the receiving groove 56 formed inside the cylindrical protruding wall 55.

The lifting assembly 100 may lower the pad holder 50 toward the floor as the pad holder 50 rotates in a preset forward direction (e.g., clockwise). The lifting assembly 100 may raise the pad holder 50 toward the main body 10 as the pad holder 50 rotates in a reverse direction (e.g., counterclockwise) opposite to the forward direction.

The lifting assembly 100 may include a male screw part 110 and a female screw part 120. The male screw part 110 may have a cylindrical shape. The rotation axis of the gear 70 may penetrate the male screw part 110. The male screw part 110 may be inserted into the female screw part 120. A protrusion 111 for coupling with the female screw part 120 may be provided on an outer surface of the male screw part 110. A plurality of protrusions 111 may be provided.

The female screw part 120 may have a cylindrical shape opened upward. The female screw part 120 may receive the male screw part 110. A slide groove 122 may be formed on an inner surface of the female screw part 120. The slide groove 122 may be formed in a spiral shape along the inner surface of the female screw part 120. The protrusion 111 formed on the outer surface of the male screw part 110 may be inserted into the slide groove 122 formed on the inner surface of the female screw part 120. When the female screw part 120 rotates, the protrusion 111 of the male screw part 110 may slide along the slide groove 122.

A tensioner 121 may be formed on an outer surface of the female screw part 120. The tensioner 121 may have elasticity and may be in close contact with an inner surface of the protruding wall 55 formed at the center of the rotating plate 52. The female screw part 120 may be fixed to the rotating plate 52 by the tensioner 121. When the rotating plate 52 rotates, the female screw part 120 may also rotate together. A rotational force of the rotating plate 52 may also be transmitted to the female screw part 120 through the tensioner 121.

The protrusion 111 of the male screw part 110 slides along the slide groove 122, formed in a spiral shape along the inner surface of the female screw part 120, thereby allowing the female screw part 120 to move upward or downward. As the female screw part 120 moves upward, the pad holder 50 may be raised. As the female screw part 120 moves downward, the pad holder 50 may be lowered. To prevent the protrusion 111 of the male screw part 110 from disengaging from the slide groove 122, both ends of the slide groove 122 may be blocked.

When the pad holder 50 rotates in the preset forward direction (e.g., clockwise), the female screw part 120 also rotates in the forward direction, and the protrusion 111 of the male screw part 110 may move to the upper end of the female screw part 120 along the slide groove 122 formed on the inner surface of the female screw part 120. Accordingly, the pad holder 50 may be lowered. The male screw part 110 may not rotate until the protrusion 111 of the male screw part 110 contacts the upper end of the slide groove 122. When the protrusion 111 of the male screw part 110 contacts the upper end of the slide groove 122, the protrusion 111 may no longer slide, and thus the male screw part 110 may rotate in the forward direction together with the female screw part 120.

When the pad holder 50 rotates in a reverse direction (e.g., counterclockwise) opposite to the forward direction, the female screw part 120 also rotates in the reverse direction, and the protrusion 111 of the male screw part 110 may move to the lower end of the female screw part 120 along the slide groove 122 formed on the inner surface of the female screw part 120. Accordingly, the pad holder 50 may be raised. When the protrusion 111 of the male screw part 110 contacts the lower end of the slide groove 122, the protrusion 111 may no longer slide, and thus the male screw part 110 may rotate in the reverse direction together with the female screw part 120.

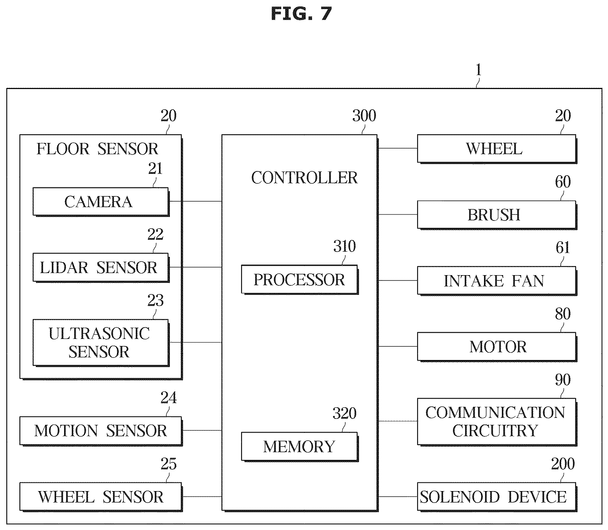

FIG. 7 is a control block diagram of a cleaning robot according to an embodiment.

Referring to FIG. 7, the cleaning robot 1 may include a floor sensor 20, the wheels 40, the brush 60, the intake fan 61, the motor 80, and the controller 300. The cleaning robot 1 may include the motion sensor 24 and the wheel sensor 25. In addition, the cleaning robot 1 may include communication circuitry 90 and the solenoid device 200.

The controller 300 may control the components of the cleaning robot 1. The controller 300 may include a processor 310 and a memory 320. The processor 310 may include logic circuits and arithmetic circuits in hardware. The processor 310 may control the electrically connected components of the cleaning robot 1 using programs, instructions, and/or data stored in the memory 320 for operation of the cleaning robot 1. The controller 300 may be implemented as a control circuit including circuit elements such as a capacitor, an inductor, and a resistor. The processor 310 and the memory 320 may be implemented as separate chips or as a single chip. In addition, the controller 300 may include a plurality of processors and a plurality of memories.

The memory 320 may store programs, applications, and/or data for operation of the cleaning robot 1, and may store data generated by the processor 310. The memory 320 may include non-volatile memory, such as read only memory (ROM) and flash memory for long-term data storage. The memory 320 may include volatile memory, such as static random access memory (S-RAM) and dynamic random access memory (D-RAM) for temporary data storage.

The floor sensor 20 may detect the floor being cleaned. For example, the floor sensor 20 may include at least one of the camera 21, the lidar sensor 22, or the ultrasonic sensor 23. The controller 300 may identify the type of the floor being cleaned based on a detection signal transmitted from the floor sensor 20. The controller 300 may identify the type of the floor being cleaned using at least one of the camera 21, the lidar sensor 22, or the ultrasonic sensor 23.

The camera 21 may obtain an image with a field of view (FOV) facing the surroundings of the main body 10. The image may be obtained at preset time intervals while the cleaning robot 1 travels in the cleaning area. The camera 21 may transmit the image to the controller 300. The controller 300 may identify various objects in the cleaning area from the image obtained by the camera 21. The controller 300 may identify the type of the floor being cleaned from the image obtained by the camera 21.

The lidar sensor 22 may obtain lidar data with a field of view facing all directions of the main body 10. The lidar sensor 22 may transmit the lidar data to the controller 300. The controller 300 may identify various objects in the cleaning area from the lidar data. The controller 300 may identify the type of the floor being cleaned from the lidar data obtained by the lidar sensor 22.

The ultrasonic sensor 23 may emit ultrasonic waves and receive echo signals reflected from an object. The controller 300 may identify the presence of the object and calculate a distance to the object based on ultrasonic data including a time difference between the ultrasonic waves emitted by the ultrasonic sensor 23 and the received echo signals. The controller 300 may identify the type of the floor being cleaned from the ultrasonic data obtained by the ultrasonic sensor 23.

The motion sensor 24 may detect a motion of the main body 10. For example, the motion sensor 24 may detect rotation of the main body 10. The motion sensor 24 may include a gyro sensor. The motion sensor 24 may detect a rotation direction and a rotation angle of the main body 10. The motion sensor 24 may also detect a rotating angular speed of the main body 10. The motion sensor 24 may transmit an electrical signal corresponding to the movement of the main body 10 to the controller 300. The controller 300 may determine the rotation direction and the rotation angle of the main body 10 based on a motion detection signal generated by the motion sensor 24.

The wheel sensor 25 may detect rotation and a speed of the wheel 40. The wheel sensor 25 may transmit an electrical signal corresponding to a rotation direction and a rotation speed of the wheel 40 to the controller 300. The controller 300 may also detect a rotation direction and a rotation angle of the main body 10 based on a wheel rotation signal generated by the wheel sensor 25.

The wheel 40 may move the main body 10. The wheel 40 may include a wheel motor and may rotate by the rotational force generated by the wheel motor. A plurality of wheels 40 may be provided, and each of the plurality of wheels 40 may be controlled independently. A traveling direction of the cleaning robot 1 may be changed as the rotation direction of the plurality of wheels 40 is changed. In addition, a traveling speed of the cleaning robot 1 may be adjusted as the rotation speed of each of the plurality of wheels 40 is adjusted. The controller 300 may change the rotation direction of the main wheels 41 to change the traveling direction of the cleaning robot 1. In a case where the two main wheels 41 rotate in different directions, the main body 10 may rotate in the left or right direction.

The brush 60 may include a brush motor. A rotational force generated by the brush motor may rotate the brush 60. A rotation speed of the brush 60 may be adjusted by adjusting a rotation speed of the brush motor. The degree of scattering of foreign substances on the traveling path of the cleaning robot 1 may vary depending on the rotation speed of the brush 60.

The intake fan 61 may draw in foreign substances scattered by the brush 60 and move the foreign substances into the dust bin. The intake fan 61 rotates by a rotational force of an intake motor, and as the intake fan 61 rotates, suction force for drawing in foreign substances may be generated. The suction force may be adjusted by adjusting a rotation speed of the intake fan 61.

The motor 80 may rotate the pad holder 50. The motor 80 may also be referred to as a "pad motor". In a case where a plurality of pad holders 50 are provided, a plurality of motors 80 corresponding to the plurality of pad holders 50 may be provided. For example, the cleaning robot 1 may include a first motor 80a that rotates the first pad holder 50a and a second motor 80b that rotates the second pad holder 50b.

The pad holder 50 may rotate in a preset forward direction or in a reverse direction opposite to the forward direction by the operation of the motor 80. The forward direction of the first pad holder 50a located at the lower right of the main body 10 may be clockwise. The forward direction of the second pad holder 50b located at the lower left of the main body 10 may be counterclockwise.

The communication circuitry 90 may perform communication with an external electronic device. The communication circuitry 90 may connect the cleaning robot 1 and at least one of a user device, a server, or a home appliance via a network. The controller 300 may obtain various information, signals, and/or data from the external electronic device via the communication circuitry 90. For example, the communication circuitry 90 may receive a remote control signal from the user device. The controller 300 may obtain an artificial intelligence (AI) model used to process various data from the server via the communication circuitry 90.

The communication circuitry 90 may include various communication circuitry. The communication circuitry 90 may include wireless communication circuitry. The wireless communication circuitry may support various wireless communications such as wireless local area network (wireless LAN), Home radio frequency (Home RF), infrared communication, Ultra-wide band (UWB) communication, Wi-Fi, Bluetooth, Zigbee, and long-range wireless network (e.g., cellular communication). In addition, the communication circuitry 90 may further include wired communication circuitry.

The solenoid device 200 may separate the holder body 51 of the pad holder 50 from the rotating plate 52 under the control of the controller 300. The controller 300 may control the solenoid device 200 to allow the stopper 210 of the solenoid device 200 to protrude downward, so as to space the holder body 51 apart from the rotating plate 52. The downwardly protruding stopper 210 may be inserted into the guide groove 54 of the holder body 51. When the stopper 210 is inserted into the guide groove 54, the rotation of the holder body 51 may be restricted, and when the rotating plate 52 continuously rotates, the holder body 51 and the rotating plate 52 may be separated from each other.

The components of the cleaning robot 1 are not limited to those illustrated in FIG. 7. Some of the components illustrated in FIG. 7 may be omitted, or other components may be further included in the cleaning robot 1. For example, the cleaning robot 1 may include a user interface and a battery. The user interface may include at least one of an input portion, a display, or a speaker. The input portion may obtain user input for operating the cleaning robot 1. The input portion may include at least one of a button or a microphone. The display may provide various information about the operation of the cleaning robot 1. In a case where the display includes a touch screen, user input may also be obtained through the display. The speaker may output various sound effects and/or voices. The battery may supply power to various electronic components included in the cleaning robot 1.

The controller 300 may identify an external object and features of the external object from at least one of image data, lidar data, or ultrasonic data using an AI model obtained from the memory 320 or a server. For example, the controller 300 may identify the type of the floor being cleaned. In addition, the controller 300 may estimate a distance to the external object and a height of the external object from the floor using depth information included in at least one of image data, lidar data, or ultrasonic data. The controller 300 may identify obstacles present on the traveling path of the cleaning robot 1 and control the wheels 40 to avoid the obstacles.

Although the camera 21, the lidar sensor 22, and the ultrasonic sensor 23 are exemplified as sensors used to identify external objects, the disclosure is not limited thereto. External objects may also be identified from data obtained using a radar sensor.

The controller 300 may control the traveling of the cleaning robot 1 based on various sensing information obtained from at least one of the camera 21, the lidar sensor 22, the ultrasonic sensor 23, the motion sensor 24, or the wheel sensor 25. For example, the controller 300 may determine a traveling path of the cleaning robot 1 based on at least one of an image obtained by the camera 21 or lidar data obtained by the lidar sensor 22.

The controller 300 of the cleaning robot 1 may generate a map of an indoor space including a plurality of areas of the indoor space. For example, the controller 300 may generate a reference map of the indoor space using at least one of image data or lidar data obtained while the cleaning robot 1 travels in the indoor space, and may identify the position of the cleaning robot 1 in the indoor space. A simultaneous localization and mapping (SLAM) algorithm may be used to generate the reference map. SLAM is an algorithm that may create a map of the space in which the cleaning robot 1 travels and simultaneously estimate the position of the cleaning robot 1 within the created map.

The reference map may include structural information of the indoor space. For example, the reference map may indicate the shape and position of structures such as walls and floors, and may indicate the type, size, and position of various objects located in the indoor space. The reference map may be stored in the memory 320. The controller 300 may update the reference map at preset intervals or each time a changed indoor structure is detected. The reference map may also be generated by a server. The server may process various data received from the cleaning robot 1 to generate the reference map, and may transmit the generated reference map to the cleaning robot 1.

The controller 300 may identify the type of the floor based on a detection signal transmitted from the floor sensor. The type of the floor may be identified as a hard floor or a soft floor. A hard floor is made of a smooth and inflexible material and may be exemplified as a stone floor, a wooden floor, or a ceramic floor. A soft floor is made of a non-smooth and flexible material and may be exemplified as a fabric having a plurality of bristles (e.g., a carpet or a rug).

The cleaning robot 1 may perform dry cleaning or wet cleaning. Dry cleaning refers to cleaning that draws in dust using the brush 60 without using the wet cleaning pad 30. Wet cleaning refers to cleaning that wipes the floor using the wet cleaning pad 30. The controller 300 of the cleaning robot 1 may determine dry cleaning or wet cleaning based on the type of the floor. The controller 300 may determine whether dry cleaning is required based on the type of the floor. In addition, the controller 300 may determine dry cleaning or wet cleaning based on a command obtained from the user interface of the cleaning robot 1 or a user device.

The controller 300 may lower the wet cleaning pad 30 toward the floor when wet cleaning a hard floor. The controller 300 may lower the wet cleaning pad 30 by controlling the motor 80 to rotate the pad holder 50 in a preset forward direction (e.g., clockwise). When the pad holder 50 rotates in the preset forward direction, the pad holder 50 may be lowered by the lifting assembly 100. Wet cleaning of the floor may be performed as the wet cleaning pad 30 contacts and rotates on the floor to be cleaned.

However, in general, a plurality of bristles of a fabric have a height above the floor on which the fabric is laid. In a case where the wet cleaning pad 30 is lowered while the cleaning robot 1 cleans a fabric having a plurality of bristles (e.g., a carpet or a rug), the fabric may be soiled by the wet cleaning pad 30. Accordingly, dry cleaning is required when the cleaning robot 1 cleans a fabric. For dry cleaning, the controller 300 may determine to raise the pad holder 50 to which the wet cleaning pad 30 is attached. The controller 300 may determine that dry cleaning is required when cleaning a soft floor such as a fabric. As dry cleaning is required, the controller 300 may control the motor 80 to rotate the pad holder 50 in the reverse direction. When the pad holder 50 rotates in the reverse direction, the pad holder 50 may be raised by the lifting assembly 100.

In a case where the first pad holder 50a and the second pad holder 50b are provided in the main body 10, the first motor 80a that rotates the first pad holder 50a and the second motor 80b that rotates the second pad holder 50b may be controlled individually. The controller 300 may control the first motor 80a to rotate the first pad holder 50a in a first reverse direction for raising the first pad holder 50a, and control the second motor 80b to rotate the second pad holder 50b in a second reverse direction, opposite to the first reverse direction, for raising the second pad holder 50b, based on identifying that the type of the floor being cleaned is a fabric.

As the protrusion 111, formed on the male screw part 110 of the lifting assembly 100, slides downward along the slide groove 122 formed on the inner surface of the female screw part 120 of the lifting assembly 100, the pad holder 50 may be raised. Because the lower end of the slide groove 122 is blocked, when the protrusion 111 of the male screw part 110 contacts the lower end of the slide groove 122, the raising of the pad holder 50 may be restricted. When the raising of the pad holder 50 is restricted, the controller 300 may stop the motor 80. That is, when raising the pad holder 50 is completed, the pad holder 50 may not rotate.

Meanwhile, the heights of the plurality of bristles of the fabric may not all be the same. A portion of the bristles may have a relatively long length. Because the lengths of the bristles of the fabric are not uniform and the maximum raising height of the wet cleaning pad 30 is structurally limited, a portion of the bristles may contact the wet cleaning pad 30 even when the wet cleaning pad 30 is in a lifted state. Accordingly, even though the wet cleaning pad 30 is raised, friction may occur between the wet cleaning pad 30 and the fabric while the cleaning robot 1 moves over the fabric.

Because the motor 80 stops when the pad holder 50 is raised to its upper limit, a friction force between the wet cleaning pad 30 and the fabric may cause the pad holder 50 to rotate in the forward direction. When the pad holder 50 rotates in the forward direction, the pad holder 50 may be lowered by the lifting assembly 100. In other words, the position of the pad holder 50 may be changed by occasional friction between the wet cleaning pad 30 and the fabric when cleaning the fabric. In a case where the pad holder 50 is undesirably lowered, the wet cleaning pad 30 continues to contact the fabric, which may cause soiling of the fabric.

The cleaning robot 1 may raise the pad holder 50 again so that the lowered position of the pad holder 50 is not maintained. The controller 300 may control the motor 80 to rotate the pad holder 50 in the reverse direction at preset intervals (e.g., every 10 seconds) while dry cleaning is required (e.g., while the main body 10 moves over the fabric).

The controller 300 may detect the rotation of the main body 10 in a state where the motor 80 providing rotational force to the pad holder 50 is stopped. For example, the controller 300 may determine a rotation direction and a rotation angle of the main body 10 based on a motion detection signal generated by the motion sensor 24. The controller 300 may also detect the rotation direction and the rotation angle of the main body 10 based on a wheel rotation signal generated by the wheel sensor 25. Various methods, other than using the motion sensor 24 and/or the wheel sensor 25, may be used to detect the rotation of the main body 10.

While dry cleaning is required, the controller 300 may control the motor 80 to rotate the pad holder 50 in the reverse direction, based on the main body 10 rotating in the same rotation direction as the reverse direction for the rotation of the pad holder 50. The controller 300 may control the motor 80 to rotate the pad holder 50 in the reverse direction, based on the main body 10 rotating by a preset threshold rotation angle in the same rotation direction as the reverse direction for the rotation of the pad holder 50.

The controller 300 may calculate an accumulated rotation angle by accumulating the rotation angle of the main body 10 each time the main body 10 rotates in the same rotation direction as the reverse direction for the rotation of the pad holder 50. The controller 300 may control the motor 80 to rotate the pad holder 50 in the reverse direction based on the accumulated rotation angle reaching the preset threshold rotation angle.

In a case where the first pad holder 50a and the second pad holder 50b are provided in the main body 10, the controller 300 may individually adjust the position of the first pad holder 50a and the position of the second pad holder 50b. The controller 300 may control the first motor 80a to rotate the first pad holder 50a in the first reverse direction or may control the second motor 80b to rotate the second pad holder 50b in the second reverse direction based on the rotation direction of the main body 10.

As described above, the cleaning robot 1 according to the disclosure may independently adjust the position of each of the plurality of pad holders 50. By selectively raising the pad holder 50 that requires position adjustment among the plurality of pad holders 50, power consumption may be reduced, and wear of the lifting assembly 100 may be reduced. In addition, the cleaning robot 1 may adjust the position of the pad holders 50 without a separate sensor for detecting the position and/or height of the pad holders 50, thereby reducing costs.

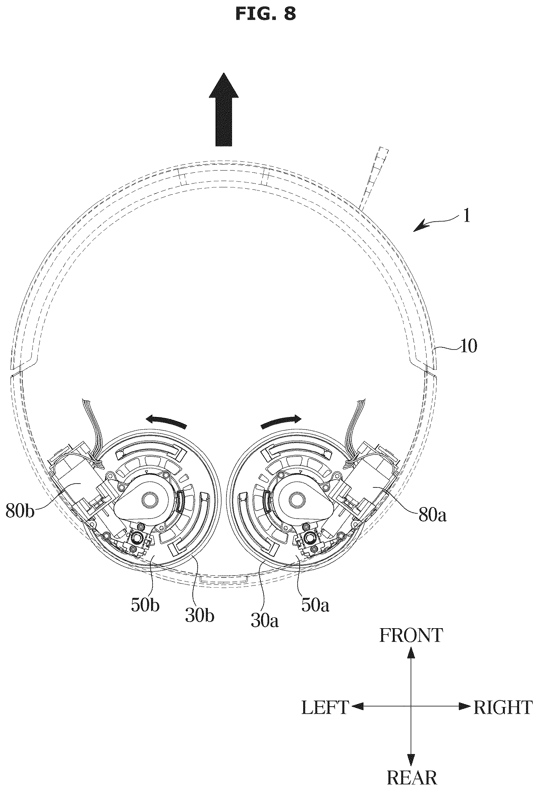

Hereinafter, FIG. 8 to FIG. 10 show the wet cleaning pads 30 viewed from above the cleaning robot 1.

FIG. 8 illustrates a rotation direction of a pad holder in a case where a cleaning robot according to an embodiment cleans a hard floor.

Referring to FIG. 8, the cleaning robot 1 may rotate the pad holder 50 to which the wet cleaning pad 30 is attached in a preset forward direction while moving forward to perform wet cleaning of the floor. To perform wet cleaning, the controller 300 of the cleaning robot 1 may control the first motor 80a to rotate the first pad holder 50a in a first forward direction, which is clockwise, and may control the second motor 80b to rotate the second pad holder 50b in a second forward direction, which is counterclockwise.

When the first pad holder 50a rotates clockwise, the first pad holder 50a is lowered, and the first wet cleaning pad 30a may be in close contact with the hard floor. When the second pad holder 50b rotates counterclockwise, the second pad holder 50b is lowered, and the second wet cleaning pad 30b may be in close contact with the hard floor.

While the main body 10 moves forward, rotating the first wet cleaning pad 30a clockwise and rotating the second wet cleaning pad 30b counterclockwise may increase friction between the hard floor and the wet cleaning pads 30. Accordingly, wet cleaning of the hard floor may be effectively performed.

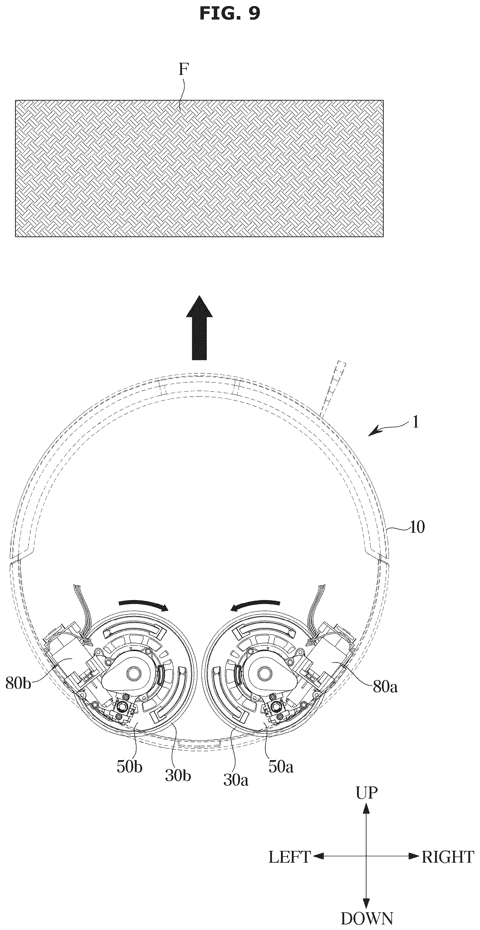

FIG. 9 illustrates a rotation direction of a pad holder in a case where a cleaning robot according to an embodiment cleans a soft floor.

Referring to FIG. 9, the cleaning robot 1 may identify the type of the floor to be cleaned as a soft floor. For example, in a case where a fabric F having a plurality of bristles is present in front of the cleaning robot 1, the type of the floor may be identified as a soft floor. The fabric having a plurality of bristles may be exemplified as a carpet or a rug. The cleaning robot 1 may identify the type of the floor using at least one of the camera 21, the lidar sensor 22, or the ultrasonic sensor 23.

As described above, when cleaning a soft floor such as the fabric F, dry cleaning is required to prevent soiling of the fabric F. The cleaning robot 1 may determine to raise the first wet cleaning pad 30a and the second wet cleaning pad 30b based on identifying that the type of the floor located in front is the fabric F.

The controller 300 of the cleaning robot 1 may rotate the pad holder 50 in the reverse direction to raise the wet cleaning pad 30. To perform dry cleaning, the controller 300 of the cleaning robot 1 may control the first motor 80a to rotate the first pad holder 50a in the first reverse direction, which is counterclockwise, and control the second motor 80b to rotate the second pad holder 50b in the second reverse direction, which is clockwise.

When the first pad holder 50a rotates counterclockwise, the first pad holder 50a is raised, and the first wet cleaning pad 30a may be spaced apart from the fabric F. When the second pad holder 50b rotates clockwise, the second pad holder 50b is raised, and the second wet cleaning pad 30b may be spaced apart from the fabric F.

Meanwhile, the heights of the plurality of bristles of the fabric F may not all be the same. A portion of the bristles may have a relatively long length. Because the lengths of the bristles of the fabric F are not uniform and the maximum raising height of the wet cleaning pad 30 is structurally limited, a portion of the bristles may contact the wet cleaning pad 30 even when the wet cleaning pad 30 is in a lifted state. Accordingly, even though the wet cleaning pad 30 is raised, friction may occur between the wet cleaning pad 30 and the fabric while the cleaning robot 1 moves over the fabric F.

Because the motor 80 stops when the pad holder 50 is raised to its upper limit, a friction force between the wet cleaning pad 30 and the fabric F may cause the pad holder 50 to rotate in the forward direction. That is, due to friction between the first wet cleaning pad 30a and the fabric F, the first pad holder 50a may rotate clockwise and be lowered. Due to friction between the second wet cleaning pad 30b and the fabric F, the second pad holder 50b may rotate clockwise and be lowered.

The cleaning robot 1 may raise the pad holder 50 again so that the lowered position of the pad holder 50 is not maintained. The controller 300 may control the motor 80 to rotate the pad holder 50 in the reverse direction at preset intervals (e.g., every 10 seconds) while dry cleaning is required (e.g., while the main body 10 moves over the fabric F).

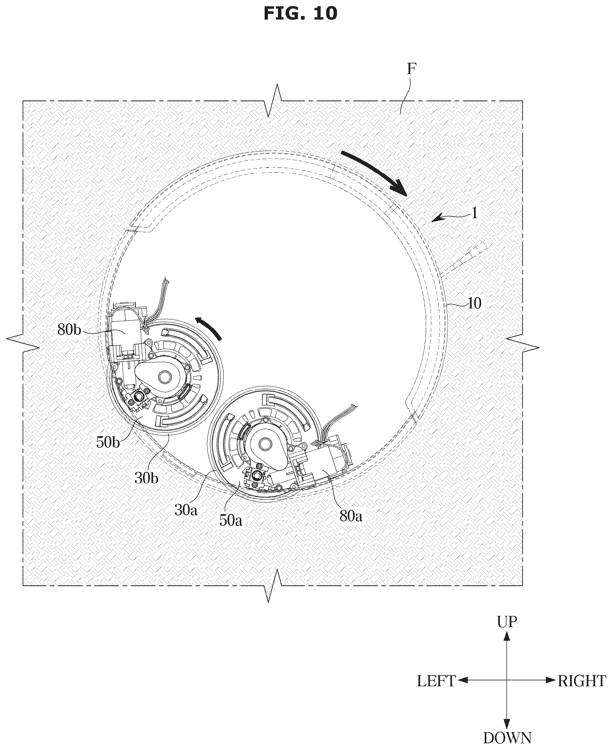

FIG. 10 illustrates an example in which a position of a pad holder is changed when a cleaning robot according to an embodiment rotates.

FIG. 10 illustrates the cleaning robot 1 rotating clockwise on the fabric F. When the main body 10 of the cleaning robot 1 rotates clockwise, the second wet cleaning pad 30b located at the lower left of the main body 10 may rotate counterclockwise due to friction between the fabric F and the wet cleaning pad 30. As the second pad holder 50b rotates counterclockwise, which corresponds to its forward direction, the second pad holder 50b is lowered by the second lifting assembly 100b. That is, when the rotation direction of the main body 10 is the same as the reverse rotational direction of the second pad holder 50b, the friction force generated between the fabric F and the second wet cleaning pad 30b may cause the second pad holder 50b to rotate in the forward direction. Accordingly, the second pad holder 50b may be released from the lifted state, and the position of the second pad holder 50b may change.

When the main body 10 rotates clockwise, the friction force generated between the fabric F and the first wet cleaning pad 30a acts in the reverse rotational direction of the first wet cleaning pad 30a, and thus the first pad holder 50a may maintain the lifted state. That is, because the rotation direction of the main body 10 is opposite to the reverse rotational direction of the first pad holder 50a, the lifted state of the first pad holder 50a may not be released.

The controller 300 of the cleaning robot 1 may control the second motor 80b to rotate the second pad holder 50b in its reverse direction (clockwise), based on the main body 10 rotating clockwise by a preset threshold rotation angle. In addition, the controller 300 of the cleaning robot 1 may accumulate a rotation angle of the main body 10 each time the main body 10 rotates clockwise to calculate an accumulated rotation angle. The controller 300 may control the second motor 80b to rotate the second pad holder 50b in its reverse direction (clockwise), based on the accumulated rotation angle reaching the preset threshold rotation angle.

As such, the cleaning robot 1 may adjust the position of the second pad holder 50b, which changes as the main body 10 rotates clockwise on the fabric F. The cleaning robot 1 may adjust the position of the second pad holder 50b at preset intervals or each time the rotation angle of the main body 10 reaches the threshold rotation angle.

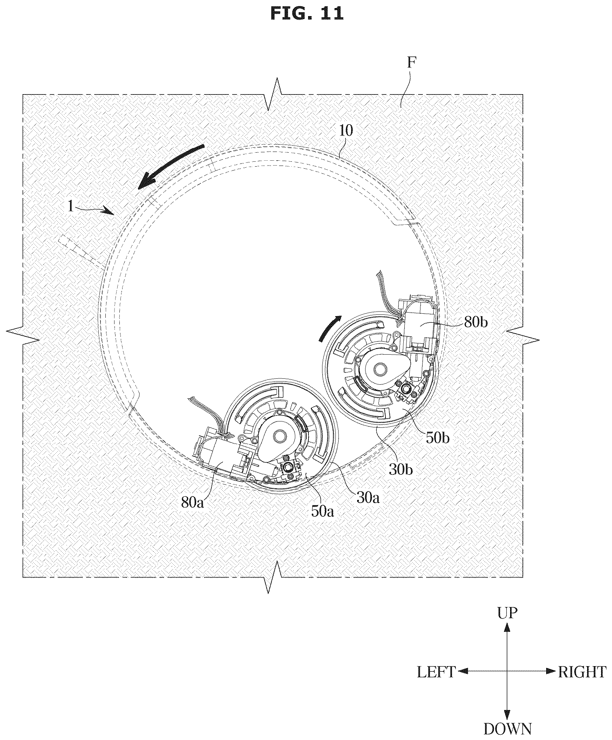

FIG. 11 illustrates another example in which a position of a pad holder is changed when a cleaning robot according to an embodiment rotates.

FIG. 11 illustrates the cleaning robot 1 rotating counterclockwise on the fabric F. When the main body 10 of the cleaning robot 1 rotates counterclockwise, the first wet cleaning pad 30a located at the lower right of the main body 10 may rotate clockwise due to friction between the fabric F and the wet cleaning pad 30. As the first pad holder 50a rotates clockwise, which corresponds to its forward direction, the first pad holder 50a is lowered by the first lifting assembly 100a. That is, when the rotation direction of the main body 10 is the same as the reverse rotational direction of the first pad holder 50a, the friction force generated between the fabric F and the first wet cleaning pad 30a may cause the first pad holder 50a to rotate in the forward direction. Accordingly, the first pad holder 50a may be released from the lifted state, and the position of the first pad holder 50a may change.

When the main body 10 rotates counterclockwise, the friction force generated between the fabric F and the second wet cleaning pad 30b acts in the reverse rotational direction of the second wet cleaning pad 30b, and thus the second pad holder 50b may maintain the lifted state. That is, because the rotation direction of the main body 10 is opposite to the reverse rotational direction of the second pad holder 50b, the lifted state of the second pad holder 50b may not be released.

The controller 300 of the cleaning robot 1 may control the first motor 80a to rotate the first pad holder 50a in its reverse direction (counterclockwise), based on the main body 10 rotating counterclockwise by a preset threshold rotation angle. In addition, the controller 300 of the cleaning robot 1 may accumulate a rotation angle of the main body 10 each time the main body 10 rotates counterclockwise to calculate an accumulated rotation angle. The controller 300 may control the first motor 80a to rotate the first pad holder 50a in its reverse direction (counterclockwise), based on the accumulated rotation angle reaching the preset threshold rotation angle.

As such, the cleaning robot 1 may adjust the position of the first pad holder 50a, which changes as the main body 10 rotates counterclockwise on the fabric F. The cleaning robot 1 may adjust the position of the first pad holder 50a at preset intervals or each time the rotation angle of the main body 10 reaches the threshold rotation angle.

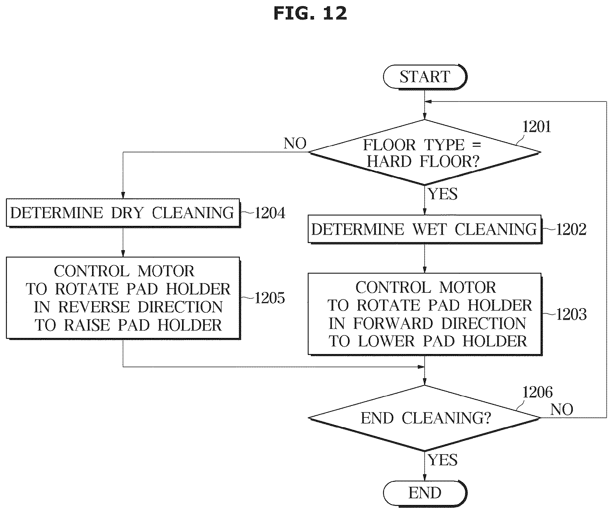

FIG. 12 is a flowchart briefly illustrating a method for controlling a cleaning robot according to an embodiment.

Referring to FIG. 12, the cleaning robot 1 may identify the type of floor being cleaned using the floor sensor 20 (1201). The cleaning robot 1 may determine to perform wet cleaning based on identifying the type of floor as a hard floor

(1202). As wet cleaning is required, the cleaning robot 1 may control the motor 80 to rotate the pad holder 50 in a preset forward direction, so as to lower the pad holder 50 (1203). The cleaning robot 1 may also determine to perform wet cleaning based on receiving a wet cleaning command via a user interface of the cleaning robot 1 or a user device.

The cleaning robot 1 may determine to perform dry cleaning based on identifying the type of floor as a floor material other than a hard floor (1204). For example, the cleaning robot 1 may determine that dry cleaning is required based on identifying the type of floor as a soft floor. In a case where the floor is covered with a fabric having a plurality of bristles (e.g., a carpet or a rug), the cleaning robot 1 may identify the type of floor as a soft floor. As dry cleaning is required, the cleaning robot 1 may control the motor 80 to rotate the pad holder 50 in the reverse direction, so as to raise the pad holder 50 (1205).

The cleaning robot 1 may determine whether to end cleaning (1206). For example, the cleaning robot 1 may determine to end cleaning when all areas of the floor have been cleaned or when a cleaning end command is received from a user interface or user device. The cleaning robot 1 may determine to lower or raise the pad holder 50 according to the identified type of floor until cleaning ends.

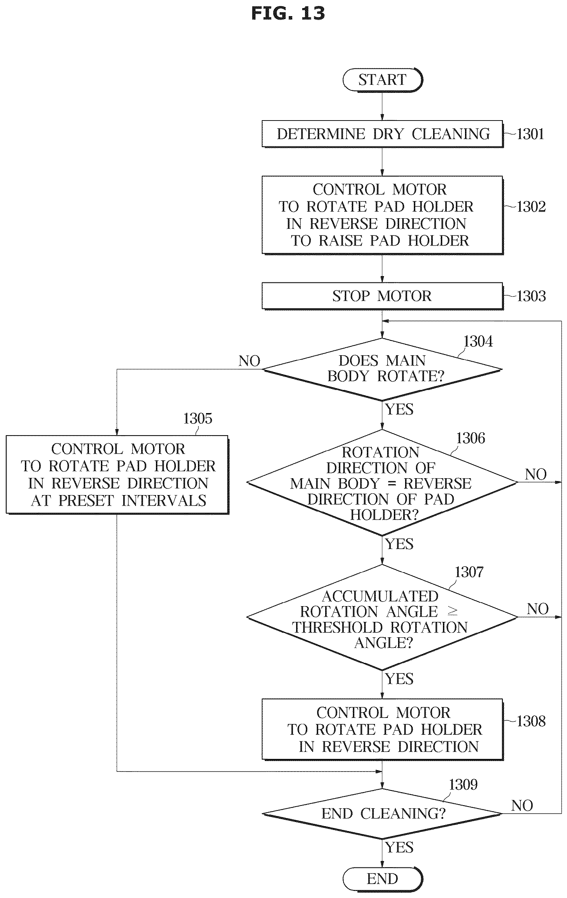

FIG. 13 is a flowchart illustrating a method for controlling a cleaning robot according to a type of floor being cleaned in more detail.

Referring to FIG. 13, the cleaning robot 1 may determine dry cleaning based on the type of floor being cleaned (1301). The cleaning robot 1 may identify the type of floor being cleaned as a soft floor (e.g., fabric) based on a detection signal generated by the floor sensor 20, and may determine that dry cleaning is required. Based on dry cleaning being required, the cleaning robot 1 may control the motor 80 to rotate the pad holder 50 in the reverse direction so as to raise the pad holder 50

(1302). The cleaning robot 1 may rotate the pad holder 50 in the reverse direction until raising of the pad holder 50 is restricted by the lifting assembly 100, and then stop the motor 80 (1303).

The controller 300 of the cleaning robot 1 may detect whether the main body 10 rotates in a state where the motor 80 is stopped, while dry cleaning is required (1304). For example, the controller 300 may determine a rotation direction and a rotation angle of the main body 10 based on a motion detection signal generated by the motion sensor 24. The controller 300 may also detect the rotation direction and the rotation angle of the main body 10 based on a wheel rotation signal generated by the wheel sensor 25.

Even in a case where the rotation of the main body 10 is not detected, the controller 300 of the cleaning robot 1 may control the motor 80 to rotate the pad holder 50 in the reverse direction at preset intervals (1305). That is, the cleaning robot 1 may periodically adjust a position of the pad holder 50.

In a case where the rotation of the main body 10 is detected, the controller 300 of the cleaning robot 1 may determine whether the rotation direction of the main body 10 is the same as the reverse direction for the rotation of the pad holder 50 (1306). In a case where the rotation direction of the main body 10 is the same as the reverse direction for the rotation of the pad holder 50, the controller 300 may detect a rotation angle of the main body 10 and an accumulated rotation angle. The controller 300 may control the motor 80 to rotate the pad holder 50 in the reverse direction, based on the rotation angle of the main body 10 or the accumulated rotation angle being greater than or equal to a threshold rotation angle (1307, 1308).

In a case where the rotation direction of the main body 10 is the same as the forward direction for the rotation of the pad holder 50, the pad holder 50 does not lower, and thus adjusting the position of the pad holder 50 is not required. The controller 300 may calculate an accumulated rotation angle by accumulating the rotation angle of the main body 10 each time the main body 10 rotates in the reverse direction of the pad holder 50.

The cleaning robot 1 may determine whether to end cleaning (1309). For example, the cleaning robot 1 may determine to end cleaning when all areas of the floor have been cleaned or when a cleaning end command is received from a user interface or user device. The cleaning robot 1 may determine to lower or raise the pad holder 50 at preset intervals or depending on whether the main body 10 rotates until cleaning ends.

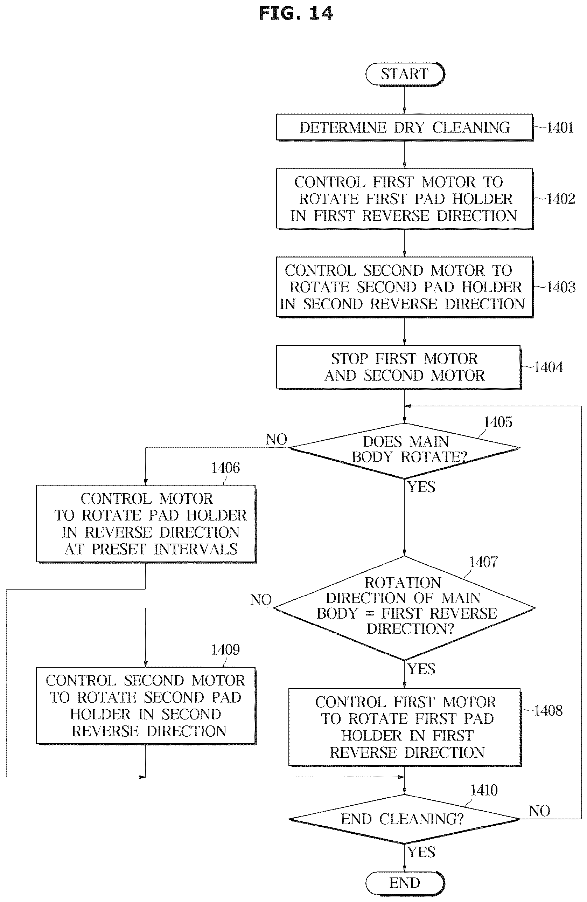

FIG. 14 is a flowchart illustrating a method for controlling a cleaning robot including a plurality of pad holders.

Referring to FIG. 14, the cleaning robot 1 may determine dry cleaning based on the type of floor being cleaned (1401). The cleaning robot 1 may identify the type of floor being cleaned as a soft floor (e.g., fabric) based on a detection signal generated by the floor sensor 20, and may determine that dry cleaning is required. Based on dry cleaning being required, the cleaning robot 1 may control the first motor 80a to rotate the first pad holder 50a in the first reverse direction (1402), and may control the second motor 80b to rotate the second pad holder 50b in the second reverse direction (1403). The cleaning robot 1 may raise the first pad holder 50a and the second pad holder 50b to their upper limits, and then stop the first motor 80a and the second motor 80b (1404).

The controller 300 of the cleaning robot 1 may detect whether the main body 10 rotates in a state where the first motor 80a and the second motor 80b are stopped, while dry cleaning is required (1405).

Even in a case where the rotation of the main body 10 is not detected, the controller 300 of the cleaning robot 1 may control the first motor 80a to rotate the first pad holder 50a in the first reverse direction and control the second motor 80b to rotate the second pad holder 50b in the second reverse direction at preset intervals

(1406). That is, the cleaning robot 1 may periodically adjust a position of the pad holder 50.

In a case where the rotation of the main body 10 is detected, the controller 300 of the cleaning robot 1 may determine whether the rotation direction of the main body 10 is the same as the first reverse direction of the first pad holder 50a

(1407). In a case where the rotation direction of the main body 10 is the same as the first reverse direction of the first pad holder 50a, the controller 300 may control the first motor 80a to rotate the first pad holder 50a in the first reverse direction (1408). The controller 300 may rotate the first pad holder 50a in the first reverse direction, based on the rotation angle of the main body 10 in the first reverse direction or an accumulated rotation angle being greater than or equal to a threshold rotation angle.

In a case where the rotation direction of the main body 10 is not the same as the first reverse direction of the first pad holder 50a, the controller 300 may control the second motor 80b to rotate the second pad holder 50b in the second reverse direction (1409). In other words, in a case where the rotation direction of the main body 10 is the same as the second reverse direction of the second pad holder 50b, the controller 300 may rotate the second pad holder 50b in the second reverse direction. The controller 300 may rotate the second pad holder 50b in the second reverse direction, based on the rotation angle of the main body 10 in the second reverse direction or an accumulated rotation angle being greater than or equal to the threshold rotation angle.

The cleaning robot 1 may determine whether to end cleaning (1410). For example, the cleaning robot 1 may determine to end cleaning when all areas of the floor have been cleaned or when a cleaning end command is received from a user interface or user device. The cleaning robot 1 may determine to lower or raise at least one of the first pad holder 50a or the second pad holder 50b at preset intervals or depending on whether the main body 10 rotates until cleaning ends.

According to an embodiment of the disclosure, a cleaning robot may include: a main body; a wheel provided in the main body to move the main body; a pad holder to which a wet cleaning pad is attachable and which is rotatable in a lower portion of the main body; a motor configured to rotate the pad holder; a floor sensor configured to detect a floor being cleaned; a controller electrically connected to the wheel, the motor, and the floor sensor; and a lifting assembly configured to lower the pad holder toward the floor as the pad holder rotates in a preset forward direction, or raise the pad holder toward the main body as the pad holder rotates in a reverse direction opposite to the forward direction. The controller may be configured to identify a type of the floor based on a detection signal transmitted from the floor sensor. The controller may be configured to determine whether dry cleaning is required based on the type of the floor. The controller may be configured to control the motor to rotate the pad holder in the reverse direction to raise the pad holder based on the dry cleaning being required.

The controller may be configured to rotate the pad holder in the reverse direction until raising of the pad holder is restricted by the lifting assembly, and then stop the motor.

The controller may be configured to control the motor to rotate the pad holder in the reverse direction at preset intervals, while the dry cleaning is required.

The controller may be configured to detect rotation of the main body in a state where the motor is stopped. While the dry cleaning is required, the controller may be configured to control the motor to rotate the pad holder in the reverse direction, based on the main body rotating in a rotation direction identical to the reverse direction for rotation of the pad holder.

The controller may be configured to control the motor to rotate the pad holder in the reverse direction, based on the main body rotating in the rotation direction by a preset threshold rotation angle.

The controller may be configured to calculate an accumulated rotation angle by accumulating a rotation angle of the main body each time the main body rotates in the rotation direction. The controller may be configured to control the motor to rotate the pad holder in the reverse direction, based on the accumulated rotation angle reaching a preset threshold rotation angle.

The cleaning robot may further include a motion sensor configured to detect the rotation of the main body. The controller may be configured to determine the rotation direction and a rotation angle of the main body based on a motion detection signal generated by the motion sensor.

The pad holder may include a first pad holder located at a lower right of the main body and a second pad holder located at a lower left of the main body. The motor may include a first motor configured to rotate the first pad holder and a second motor configured to rotate the second pad holder. The lifting assembly may include a first lifting assembly configured to lower or raise the first pad holder and a second lifting assembly configured to lower or raise the second pad holder. The controller may be configured to control the first motor to rotate the first pad holder in a first reverse direction to raise the first pad holder. The controller may be configured to control the second motor to rotate the second pad holder in a second reverse direction opposite to the first reverse direction to raise the second pad holder.

The controller may be configured to detect rotation of the main body in a state where the motor is stopped. While the dry cleaning is required, the controller may be configured to control the first motor to rotate the first pad holder in the first reverse direction or control the second motor to rotate the second pad holder in the second reverse direction based on a rotation direction of the main body.

According to an embodiment of the disclosure, in a method for controlling a cleaning robot including a pad holder to which a wet cleaning pad is attachable and which is rotatable in a lower portion of a main body, a motor configured to rotate the pad holder, a lifting assembly configured to lower or raise the pad holder according to rotation of the pad holder, a floor sensor configured to detect a floor being cleaned, and a controller, the method may include: identifying a type of the floor using the floor sensor; determining, by the controller, whether dry cleaning is required based on the type of the floor; and controlling, by the controller, the motor to rotate the pad holder in a reverse direction opposite to a preset forward direction so as to raise the pad holder, based on the dry cleaning being required.

The controlling of the motor may include rotating the pad holder in the reverse direction until raising of the pad holder is restricted by the lifting assembly, and then stopping the motor.

The controlling of the motor may further include rotating the pad holder in the reverse direction at preset intervals, while the dry cleaning is required.

The method may further include detecting rotation of the main body in a state where the motor is stopped. While the dry cleaning is required, the controlling of the motor may further include rotating the pad holder in the reverse direction, based on the main body rotating in a rotation direction identical to the reverse direction of the pad holder.

The controlling of the motor may include rotating the pad holder in the reverse direction, based on the main body rotating in the rotation direction by a preset threshold rotation angle.

The detecting of the rotation of the main body may include calculating an accumulated rotation angle by accumulating a rotation angle of the main body each time the main body rotates in the rotation direction. The controlling of the motor may include rotating the pad holder in the reverse direction, based on the accumulated rotation angle reaching a preset threshold rotation angle.

The detecting of the rotation of the main body may include determining the rotation direction and a rotation angle of the main body based on a motion detection signal generated by a motion sensor.

The pad holder may include a first pad holder located at a lower right of the main body and a second pad holder located at a lower left of the main body. The motor may include a first motor configured to rotate the first pad holder and a second motor configured to rotate the second pad holder. The lifting assembly may include a first lifting assembly configured to lower or raise the first pad holder and a second lifting assembly configured to lower or raise the second pad holder. The controlling of the motor may include controlling the first motor to rotate the first pad holder in a first reverse direction to raise the first pad holder, or controlling the second motor to rotate the second pad holder in a second reverse direction opposite to the first reverse direction to raise the second pad holder.

The method may further include detecting rotation of the main body in a state where the motor is stopped. The controlling of the motor may further include, while the dry cleaning is required, controlling the first motor to rotate the first pad holder in the first reverse direction or controlling the second motor to rotate the second pad holder in the second reverse direction based on a rotation direction of the main body.

As described above, when dry cleaning is required based on the type of floor, the cleaning robot and the method for controlling the same may raise a wet cleaning pad and adjust a position of the wet cleaning pad according to a predetermined condition. Thus, a flooring material may be prevented from being soiled by the wet cleaning pad.

The cleaning robot and the method for controlling the same may independently adjust a position of each of a plurality of pad holders, thereby reducing power consumption and wear on a lifting assembly that lowers or raises the pad holders.

The disclosed embodiments may be implemented in the form of a recording medium that stores instructions executable by a computer. The instructions may be stored in the form of program codes, and when executed by a processor, the instructions may create a program module to perform operations of the disclosed embodiments.

The machine-readable recording medium may be provided in the form of a non-transitory storage medium. The term 'non-transitory storage medium' may refer to a tangible device without including a signal (e.g., electromagnetic waves) and may not distinguish between storing data in the storage medium semi-permanently and temporarily. For example, the non-transitory storage medium may include a buffer that temporarily stores data.

The method according to the various embodiments of the disclosure may be provided in a computer program product. The computer program product may be a commercial product that may be traded between a seller and a buyer. The computer program product may be distributed in the form of a storage medium (e.g., a compact disc read only memory (CD-ROM)), through an application store (e.g., play store^{™}), directly between two user devices (e.g., smartphones), or online (e.g., downloaded or uploaded). In the case of online distribution, at least part of the computer program product (e.g., a downloadable app) may be at least temporarily stored or arbitrarily created in a storage medium that may be readable to a device such as a server of the manufacturer, a server of the application store, or a relay server.

Although embodiments of the disclosure have been described with reference to the accompanying drawings, a person having ordinary skilled in the art will appreciate that other specific modifications may be easily made without departing from the technical spirit or essential features of the disclosure. Therefore, the foregoing embodiments should be regarded as illustrative rather than limiting in all aspects.

## Claims

1. A cleaning robot, comprising:
a main body;
a wheel in the main body to move the main body;
a pad holder at a lower portion of the main body, the pad holder being rotatable and to which a wet cleaning pad is attachable;
a motor configured to rotate the pad holder;
a floor sensor configured to detect a floor to be cleaned;
a controller electrically connected to the wheel, the motor, and the floor sensor; and
a lifting assembly configured to lower the pad holder toward the floor as the pad holder rotates in a preset forward direction, or raise the pad holder toward the main body as the pad holder rotates in a reverse direction opposite to the forward direction,
wherein the controller is configured to:
identify a type of the floor based on a detection signal transmitted from the floor sensor,
determine whether a dry cleaning is required based on the type of the floor, and
control the motor to rotate the pad holder in the reverse direction to raise the pad holder based on the dry cleaning being determined as required.

2. The cleaning robot of claim 1, wherein the controller is configured to rotate the pad holder in the reverse direction until raising of the pad holder is restricted by the lifting assembly, and stop the motor.

3. The cleaning robot of claim 2, wherein the controller is configured to control the motor to rotate the pad holder in the reverse direction at preset intervals, based on the dry cleaning being determined as required.

4. The cleaning robot of claim 2, wherein the controller is configured to:
detect a rotation of the main body in a state where the motor is stopped, and
control the motor to rotate the pad holder in the reverse direction, based on the main body rotating in a rotation direction identical to the reverse direction and based on the dry cleaning being determined as required.

5. The cleaning robot of claim 4, wherein the controller is configured to control the motor to rotate the pad holder in the reverse direction, based on the main body rotating in the rotation direction by a preset threshold rotation angle.

6. The cleaning robot of claim 4, wherein the controller is configured to:
calculate an accumulated rotation angle by accumulating a rotation angle of the main body each the rotation of the main body, and
control the motor to rotate the pad holder in the reverse direction, based on the accumulated rotation angle reaching a preset threshold rotation angle.

7. The cleaning robot of claim 4, further comprising:
a motion sensor configured to detect the rotation of the main body,
wherein the controller is configured to determine the rotation direction of the main body and a rotation angle of the main body based on a motion detection signal generated by the motion sensor.

8. The cleaning robot of claim 1, wherein the pad holder includes a first pad holder located at a lower right side of the main body and a second pad holder located at a lower left side of the main body,
the motor includes a first motor configured to rotate the first pad holder and a second motor configured to rotate the second pad holder,
the lifting assembly includes a first lifting assembly configured to lower and configured to raise the first pad holder and a second lifting assembly configured to lower and configured to raise the second pad holder, and
the controller is configured to:
control the first motor to rotate the first pad holder in a first reverse direction to raise the first pad holder, and
control the second motor to rotate the second pad holder in a second reverse direction opposite to the first reverse direction to raise the second pad holder.

9. The cleaning robot of claim 8, wherein the controller is configured to:
detect rotation of the main body based on the motor being stopped, and
control the first motor to rotate the first pad holder in the first reverse direction and control the second motor to rotate the second pad holder in the second reverse direction based on a rotation direction of the main body and based on the dry cleaning being determined as required.

10. A method for controlling a cleaning robot comprising a pad holder in a lower portion of a main body, the pad holder being rotatable and to which a wet cleaning pad is attachable, the method comprising:
identifying a type of a floor using a floor sensor configured to detect a floor to be cleaned;
determining, by a controller, whether a dry cleaning is required based on the type of the floor; and
controlling, by the controller, a motor configured to rotate the pad holder in a reverse direction opposite to a preset forward direction so as to raise the pad holder, based on the dry cleaning being determined as required.

11. The method of claim 10, wherein the controlling of the motor comprises rotating the pad holder in the reverse direction until raising of the pad holder is restricted by the lifting assembly, and stopping the motor.

12. The method of claim 11, wherein the controlling of the motor further comprises rotating the pad holder in the reverse direction at preset intervals, based on the dry cleaning being determined as required.

13. The method of claim 11, further comprising:
detecting a rotation of the main body based on the motor being stopped,
wherein the controlling of the motor further comprises rotating the pad holder in the reverse direction, based on the main body rotating in a rotation direction identical to the reverse direction and based on the determination the dry cleaning is required.

14. The method of claim 13, wherein the controlling of the motor comprises rotating the pad holder in the reverse direction, based on the main body rotating in the rotation direction by a preset threshold rotation angle.

15. The method of claim 13, wherein the detecting of the rotation of the main body comprises calculating an accumulated rotation angle by accumulating a rotation angle of the main body each the rotation of the main body, and
the controlling of the motor comprises rotating the pad holder in the reverse direction, based on the accumulated rotation angle reaching a preset threshold rotation angle.
